# FASCICULE DE BREVET EUROPEEN

(11) **EP 2 164 241 B1**
(45) Date de publication et mention de la délivrance du brevet: **28.09.2011**
(21) Numéro de dépôt: 09305698.4
(22) Date de dépôt: 22.07.2009
(51) Int. Cl.: H04N 1/50, G03B 27/475

(54) **Installation pour l'exposition d'un film cinématographique à partir d'images numériques**
Anlage zumBelichten Vorführen eines Kinofilms auf der Grundlage von Digitalbildern
Installation for exposing a movie film on the basis of digital images

(30) Priorité: 11.09.2008 FR 0856091
(43) Date de publication de la demande: 17.03.2010
(73) Titulaire: Photo ME Holding France, 38130 Echirolles (FR)
(72) Inventeur: Lavergne, Patrice, 38770 Monteynard (FR); Lan, Ke-Hua, 38100 Grenoble (FR); Croll, Christian, 38640 Claix (FR)
(74) Mandataire: Vuillermoz, Bruno

(56) Documents cités:
- EP-A- 0 308 967
- EP-A- 0 356 345
- EP-A- 1 335 582
- WO-A-03/071778
- JP-A- 8 006 181
- US-A- 4 903 068
- US-A- 5 424 802
- US-A- 5 870 205
- US-B1- 6 734 993

## Description

### DOMAINE DE L'INVENTION

La présente invention s'inscrit dans l'exposition de films argentiques destinés à la projection de films cinématographiques. Plus particulièrement, elle s'inscrit dans le domaine de la postproduction cinématographique.

Traditionnellement, les films de projection cinématographique, c'est-à-dire les films utilisés dans les salles de cinéma, sont obtenus optiquement par contact avec un film négatif intermédiaire, dénommé dans la profession par l'expression anglo-saxonne « *intermediate* ».

Dans la filière traditionnelle, ce film « intermediate » est obtenu par deux étapes de contact à partir du film de prise de vue, c'est-à-dire à partir du film directement issu de la caméra cinématographique, qui est également négatif. Ces deux étapes sont respectivement constituées par l'interpositif et l'intemégatif.

Dans le cadre de la présente invention, le film « *intermediate* » est obtenu par projection d'une image numérique sur un support film photosensible, et s'inscrit donc dans la filiale dite, dans le domaine considéré, du « *digital intermediate* ».

L'invention vise donc une installation propre à la fabrication d'un tel film « *intermediate* » à partir d'images numériques, le film produit étant ensuite utilisé, soit comme « master » des films de projection, notamment par contact, soit pour archiver l'oeuvre cinématographique, notamment sur support noir et blanc, soit encore pour réaliser le film dit de prestige, c'est-à-dire l'exposition directe du film de projection pour éviter les pertes de FTM (fonction de transfert de modulation) dues au tirage contact.

### ETAT ANTERIEUR DE LA TECHNIQUE

On a décrit dans le document EP 1 335 582 un dispositif pour impressionner des images codées numériquement sur un média photosensible.

Il convient de préciser que le domaine dit de la postproduction cinématographique travaille selon deux résolutions, respectivement la résolution dite 2K, signifiant sur le plan théorique 2048 x 1556 pixels, et le 4K signifiant toujours sur le plan théorique 4096 x 3112 pixels.

La technologie la plus ancienne mise en oeuvre pour la réalisation de film « Digital intermediate » concerne le tube cathodique, mieux connu sous l'expression anglo-saxonne CRT (« *cathode ray tube* »). Cette technologie met donc en oeuvre un spot émanant d'un tube cathodique porteur de l'image à exposer sur le film photosensible.

La précision du spot est conditionnée notamment par son énergie. Or, pour une résolution élevée, il convient de mettre en oeuvre un spot peu énergétique, de sorte que le rapport productivité / fonction de transfert de modulation, c'est à dire le pourcentage de l'information spatiale de l'image de départ réellement transférée sur le support film en fonction de la résolution, est médiocre. Au surplus, la précision géométrique, le spectre d'émission et la pureté de la couche de phosphore, dont est revêtue la face interne du tube, exigent des tubes cathodiques de très haute qualité, relativement coûteux, et d'une durée limitée dans le temps en raison du fait que le phosphore change de propriété au fur et à mesure de son usage.

Cette technologie est donc particulièrement contraignante sur le plan de l'entretien et de la maintenance.

On connaît également la technologie dite laser. Celle-ci est basée sur le balayage du film objet en mouvement par trois faisceaux lasers issus de lasers solides ou gazeux (pour les couleurs bleu et vert) et d'une diode laser (pour la couleur rouge).

Si certes, les résolutions en 2K et 4K sont susceptibles d'être obtenues avec cette technologie, en revanche la productivité n'est pas toujours au rendez-vous, notamment lorsque l'on souhaite aboutir à un format film cinémascope.

Au surplus, la mise en oeuvre de la technologie laser, notamment du laser bleu, est coûteuse en termes de maintenance. Qui plus est, la durée de vie des lasers est limitée.

Enfin, la mise en oeuvre du laser suppose un système d'avance du film lors de l'exposition, synchronisé à la fraction du micromètre près, complexe et coûteux à réaliser.

Le besoin s'est donc fait sentir de développer un système de réalisation et de production de films de projection cinématographiques à partir d'images numériques, susceptible d'aboutir à une résolution 2K et 4K, avec des vitesses de production élevées, des qualités de contraste importantes, et selon des coûts d'opération et de maintenance réduits.

Tel est l'objet de la présente invention.

### EXPOSE DE L'INVENTION

La présente invention concerne donc une installation pour l'exposition d'un film cinématographique à partir d'images numériques comme définit dans la rev. indépendante 1

En d'autres termes, l'invention consiste d'une part à mettre en oeuvre comme source d'images un écran matriciel, par exemple à cristaux liquides type LCD, ou CRT ou Lcos (LCD on silicium) ou DMD (« Digital Micro Mirrors » : ce système met en oeuvre une pluralité de micro-miroirs de forme carrée, chacun monté sur un axe rotatif, et susceptibles donc de subir une rotation de plus ou moins 10° par rapport à une position origine), et d'autre part à intégrer au sein de ladite installation des moyens pour permettre son calage en termes de caractéristiques optiques aux fins d'optimiser le contraste au niveau du film exposé, de procéder à la correction des inhomogénéités d'image inhérentes au défaut d'éclairage, de vignettagé d'objectif, ainsi qu'à la correction du paramètre dénommé PRNU (selon l'expression anglo-saxonne « *pixel response non uniformity* ») ainsi que la focalisation par action sur l'objectif.

L'intégration de ces moyens d'optimisation des caractéristiques optiques permet non seulement d'aboutir à des films de meilleure qualité sur le plan optique, mais également de générer un gain de temps substantiel pour le calage de l'installation. Il a en effet été évoqué dans le cadre de l'identification de l'état antérieur de la technique, les problèmes résultant de l'optimisation des paramètres d'une telle installation en vue d'une optimisation de la qualité optique des films obtenus.

Dans la plupart des dispositifs de l'art antérieur, on utilise à cette fin des rushs issus du film obtenu par la caméra de prise de vue que l'on soumet à une analyse au moyen de dispositifs classiques hors de ladite installation. Cela génère de fait des pertes de temps.

Selon l'invention, le moyen d'analyse d'image est constitué par un circuit à transfert de charges, classiquement dénommé CCD (pour l'expression anglo-saxonne « *charge coupled device* », ou encore un Cmos ou autre capteur matriciel, dont les signaux sont transmis à un microprocesseur ou carte électronique intégrant les algorithmes de traitement nécessaire aux fins d'aboutir à l'optimisation des paramètres de l'installation.

Selon une autre caractéristique de l'invention, l'ensemble constitué par l'écran matriciel à cristaux liquides ou autres et les polariseurs amont et aval, le cas échéant associés l'écran, est monté sur une platine piézoélectrique, destinée à assurer le décalage latéral dudit ensemble ou bloc d'affichage, c'est-à-dire perpendiculairement à l'axe optique de l'installation. Ce faisant, on optimise la résolution de l'image projetée, telle que par exemple décrit dans les documents FR-A-2 783 387 et FR-A-2 836 238.

De par la mise en oeuvre d'une telle platine piézoélectrique, on obtient de manière très aisée la résolution 4K préconisée par la profession.

Selon encore une autre caractéristique avantageuse de l'invention, l'installation comporte également une photodiode associée à une lentille, situées sur l'axe optique de l'objectif de projection immédiatement en aval du passe vue.

Les signaux ainsi reçus par la photodiode sont également susceptibles d'être traités en vue d'une analyse densitométrique, permettant en outre de mesurer la réponse de l'écran matriciel.

D'autres caractéristiques de la présente installation apparaitront de manière plus claire dans le cadre de la description détaillée qui suit.

### BREVE DESCRIPTION DES FIGURES

La manière dont l'invention peut être réalisée et les avantages qui en découlent ressortiront mieux de l'exemple de réalisation qui suit, donné à titre indicatif et non limitatif à l'appui des figures annexées.

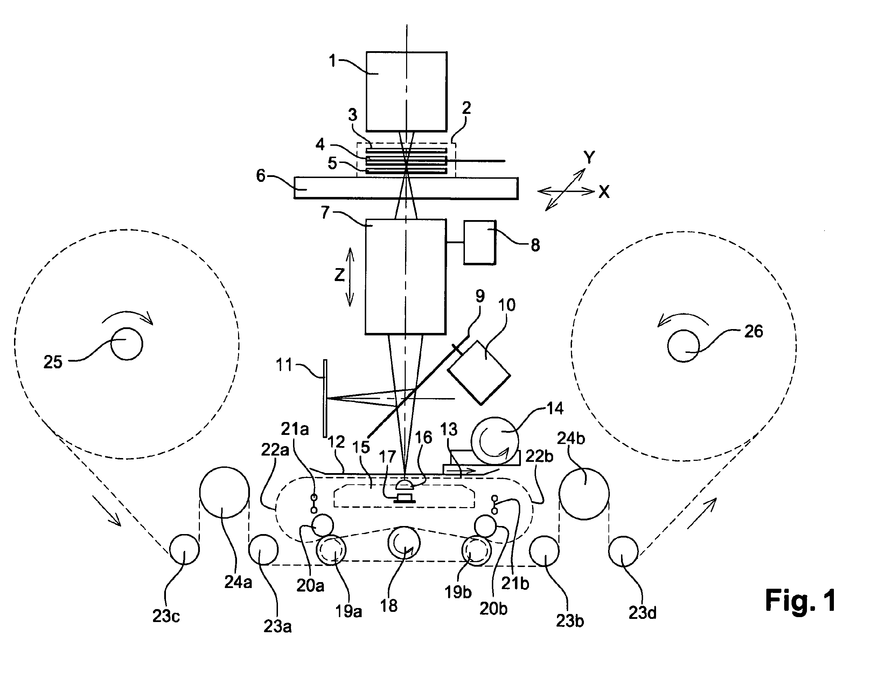

La figure 1 est une représentation schématique en perspective tendant à illustrer le principe général de fonctionnement de l'installation conforme à l'invention.

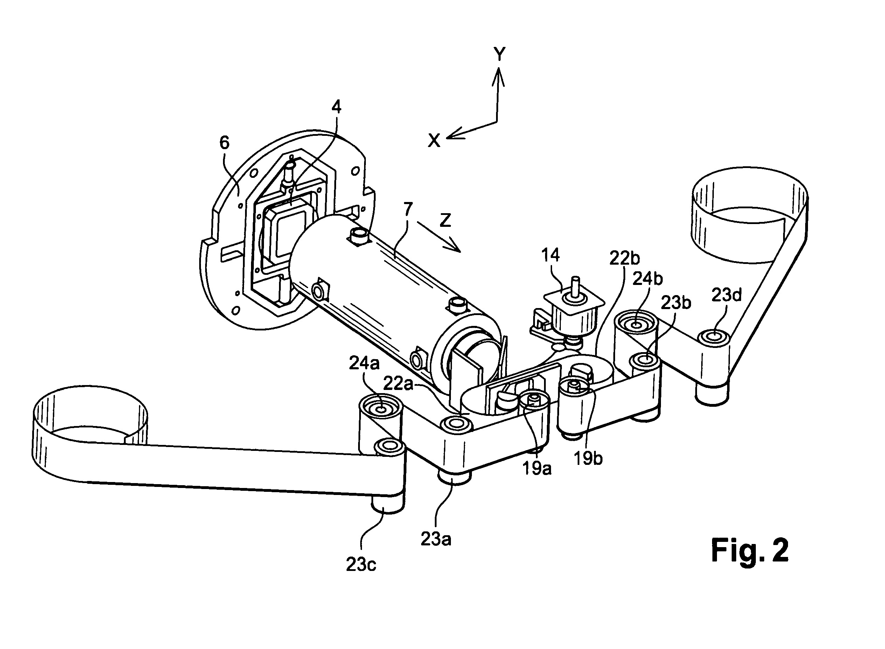

La figure 2 est une vue propre à illustrer la diffusion du faisceau optique de ladite installation

### DESCRIPTION DETAILLEE DE L'INVENTION

L'installation conforme à l'invention se présente sous la forme d'une station de travail comportant fondamentalement trois volumes, respectivement un volume pour le stockage d'une bobine de film photosensible non exposée, un volume de stockage d'une bobine dudit film photosensible obtenu après exposition, et un volume d'exposition proprement dit. Ces trois volumes sont obturés chacun par un capot mobile assurant l'étanchéité à la lumière.

Ladite station comporte en outre un pupitre de commande, avantageusement constitué d'un écran tactile, et propre à induire les différentes phases d'exposition du film.

Il va tout d'abord être décrit dans le détail l'optique proprement dite de l'installation.

Celle-ci comporte donc tout d'abord une source lumineuse (1), constituée en l'espèce de diodes électroluminescentes. Dans la forme de réalisation particulière de l'invention, ces diodes sont respectivement :
- des diodes émettant dans le rouge, selon une longueur d'onde de 685 nanomètres et d'une puissance électrique de 12 à 16 watts ;
- des diodes émettant également dans le rouge, mais selon une longueur d'onde de 655 nanomètres, et d'une puissance électrique de 4 à 6 watts ;
- une diode émettant dans le vert, selon une longueur d'onde de 530 nanomètres et d'une puissance électrique de 3 à 5 watts ;
- et enfin une diode bleu émettant dans le bleu, selon une longueur d'onde de 455 nanomètres et d'une puissance électrique de 1 à 3 watts.

Les premières diodes rouges (émettant à 685 nanomètres) sont mises en oeuvre pour l'exposition du film photosensible en vue de réaliser le film dit « *intermediate* », le film d'archivage noir et blanc, ou le film de prestige de projection.

Corollairement, les secondes diodes rouges (émettant à 655 nanomètres) sont mises en oeuvre pour l'exposition du film photosensible de type prise de vue, plus granuleux que les films de tirage, car plus sensibles, parfois souhaité par les réalisateurs, par exemple pour donner un aspect argentique à des prises de vues numériques, très lisses. La sensibilité spectrale de ces films est centrée sur 650 nanomètres dans le rouge, contre environ 690 nanomètres pour les films de tirage.

Ces différentes diodes émettent selon l'axe optique du dispositif et sont notamment destinés à éclairer, après mis en forme (pour un faisceau divergent contrôlé) un bloc d'affichage (2) au niveau duquel sont affichées les images numériques à exposer sur le film photosensible.

Ce bloc d'affichage (2) est constitué par exemple d'un écran LCD (4) décrit plus en détail ultérieurement, d'un polariseur linéaire d'entrée (3) et d'un polariseur linéaire de sortie (5), (avantageusement traité antireflets).

Cet écran LCD fonctionne en mode transmissif, et présente une résolution de 2048 x 1556 pixels carrés.

Le bloc d'affichage (2) est monté sur une platine piézoélectrique (6), destinée à permettre le déplacement latéral dudit bloc selon deux axes « X » et « Y » perpendiculaires à l'axe « Z » correspondant à l'axe optique de l'installation.

Une telle platine est destinée à permettre la réalisation de micro déplacements, ainsi que décrit par exemple dans le document FR-A-2 836 238. Ce faisant, en multipliant les phases d'exposition d'une même vue affichée sur l'écran LCD, on augmente la résolution au niveau du film exposé, permettant notamment d'aboutir à la définition dite 4K mentionnée précédemment.

Cet écran LCD pourrait être remplacé par un écran Lcos (LCd On Silicium) réflectif ou encore par un système à micro miroirs (DMD), qui peuvent se passer de déplacement latéral, et donc éviter la mise en oeuvre d'une platine piézoélectrique.

Le signal optique issu de l'écran LCD traverse alors un objectif de projection télécentrique (7), susceptible en outre selon une caractéristique avantageuse de l'invention, d'être déplacée selon la direction « Z » de l'axe optique de l'installation aux moyens d'un moteur électrique (8), dit de focalisation, fonctionnant en mode pas à pas.

En aval de l'objectif (7) est monté un miroir (9), orienté d'un angle de 45° par rapport à l'axe optique de l'installation. Ce miroir est déplaçable selon au moins deux positions :
- une position escamotée, permettant au faisceau optique issu de l'objectif de venir exposer le film photosensible au niveau du passe vue décrit ci-après ;
- une position de renvoi, positionnée sur l'axe optique et induisant la réflexion dudit faisceau lumineux sur un dispositif d'analyse d'image (11) décrit ci-après plus en détail.

Le déplacement du miroir est réalisé au moyen d'un moteur électrique (10) d'un type en soi connu. Cependant, tout autre moyen conviendrait également, tel que par exemple, un solénoïde.

Le dispositif d'analyse d'image (11) est en l'espèce constitué d'un capteur CCD monochrome haute résolution de 4008 x 2672 pixels carrés, du type commercialisé par DALSA par exemple sous la référence FTF4027M, présentant une taille de pixel de 9 x 9 micromètres.

L'intérêt et le fonctionnement de ce dispositif d'analyse d'images sera décrit ci-après plus en détail.

Ainsi donc, lorsque le miroir (9) est escamoté, c'est-à-dire non situé sur l'axe optique de l'installation, le faisceau lumineux issu de l'objectif de projection (7) vient exposer le film photosensible au niveau d'un passe vue, dont le plan d'exposition constitue la référence pour la focalisation de l'objectif. A cet égard, il est à souligner que le CCD (11) est situé exactement symétriquement audit plan d'exposition par rapport au plan contenant le miroir (9). Cette caractéristique est importante compte-tenu du rôle dévolu audit CCD.

Au niveau dudit passe vue, le film photosensible est acheminé selon un mode pas à pas, chaque pas correspondant à l'exposition d'une image sur ledit film.

Cette progression en mode pas à pas est assurée au moyen d'un moteur fonctionnant également selon le mode pas à pas (en l'espèce 100 pas par tour), tel que commercialisé par la société PORTESCAP. Ce moteur active une griffe venant s'insérer dans les perforations dont sont munis les bords latéraux du film photosensible. Il présente la caractéristique d'avoir une accélération angulaire très importante, typiquement 50000 rad/s², permettant un déplacement rapide du film photosensible vue par vue entre chaque phase d'exposition. Chaque tour moteur provoque une avance de quatre perforations du film, correspondant à une vue.

Le déroulement du film photosensible va être décrit ci-après. Ledit film est stocké sur une bobine de stockage, elle-même montée sur un moteur (25) créant un couple variable dans le sens inverse de rotation de l'avancement du film, et ce afin de fournir une tension constante typiquement comprise entre 200 et 500 grammes sur le film, en fonction du diamètre de la bobine c'est-à-dire en fonction de la quantité de film présente au sein de la bobine.

Corollairement, après exposition, le film est renvidé sur une bobine de film réceptrice montée sur un moteur (26), créant également un couple variable cette fois dans le sens de rotation de l'avancement du film, toujours dans l'objectif d'obtenir une tension constante de même grandeur que celle du moteur de la bobine de film débitrice, là encore en fonction du diamètre de film présent sur la bobine.

Entre ces deux bobines, le film traverse tout d'abord une chicane, en l'espèce constituée par des rouleaux de renvoi (23a) et (23c) et le rouleau (24a), destinés à rendre étanche à la lumière les compartiments dans lequel sont stockées la bobine de film photosensible non exposé et la zone d'exposition.

Postérieurement à cette chicane, le film est pris en charge par un rouleau denté dit rouleau débiteur de film (19a), assurant son acheminement au niveau du passe vue tout en créant une boucle de film (22a) préalablement à son introduction au niveau du passe vue. Corollairement après le passe vue, il se créé également une boucle de film (22b) avant prise en charge par un autre rouleau débiteur du film (19b), et renvoi au niveau d'un nouveau jeu de rouleaux chicane pour assurer l'étanchéité à la lumière (23b, 23d et 24b) puis rembobinage sur la bobine de stockage du film exposé.

Les rouleaux (19a) et (19b) sont actionnés au moyen d'un moteur (18) avançant de manière continue. Ces rouleaux ou tambours, comme déjà dit sont dentés, les dents venant coopérer avec les perforations dont est muni le film photosensible. La vitesse de rotation desdits rouleaux (19a et 19b) est choisie de telle sorte à, compte tenu en outre de la progression en mode pas à pas du film au niveau du passe vue réalisée par le moteur (14), et donc de la périodicité de fonctionnement dudit moteur, à constituer les boucles précitées, constituant chacune une zone d'amortissement ou zone tampon, la longueur de la boucle étant choisie, par sélection des vitesses respectives du moteur (18) d'une part, et du moteur (14) d'autre part, ces zones tampon ayant vocation à ne pas gêner la progression en mode pas à pas du film au niveau du passe vue.

En cas de dysfonctionnement desdits moteurs, l'installation comporte également des capteurs respectivement (21a) au voisinage de la boucle amont (22a), et (21b) au voisinage de la boucle aval (22b), qui sont actionnés si la boucle concernée devient de dimension trop réduite respectivement en amont et/ou en aval du passe vue pour assurer efficacement son rôle tampon. Ces capteurs sont de facture classique, de sorte qu'il n'y a pas lieu de les décrire ici en détail.

Après exposition, le film photosensible est développé selon une chimie classique bien connue dans le domaine argentique.

Le passe-vue est destiné, comme déjà indiqué à positionner le film à exposer au niveau du plan d'exposition, au niveau est focalisé le faisceau issu de l'objectif de projection. Le film glisse au niveau du passe-vue et est maintenu selon le plan d'exposition au moyen d'un presse-film.

Il va être décrit ci-après la mise en oeuvre du CCD (11) (ou Cmos ou un autre capteur matriciel) conforme à l'invention. Comme indiqué en préambule, il a vocation à analyser le signal issu de l'objectif (7) et, par la mise en oeuvre d'algorithmes spécifiques, à optimiser l'homogénéité de l'éclairage issu de la source lumineuse (1), de l'écran à cristaux liquides (5), et de l'objectif (7).

Il a également pour vocation de mesurer le déplacement de la platine piézoélectrique (6) qui permet de doubler la résolution, et donc d'en ajuster parfaitement les paramètres de contrôle.

En fait, l'objectif visé de par la mise en oeuvre de ce CCD et des traitements subséquents est de calibrer tous les éléments qui influencent la qualité d'image, afin de les maintenir dans des tolérances extrêmement serrées, sans intervention d'un technicien, et de faciliter le diagnostique et la plupart des opérations de maintenance. Ainsi, il permet :
■ la calibration de la focalisation ;
■ l'ajustement de l'axe de l'objectif;
■ la calibration du déplacement de la platine piézoélectrique ;
■ la calibration du phénomène de « Flicker » de l'écran LGD ;
■ la calibration du PRNU de l'écran LCD ;
■ la calibration du niveau de lumière d'exposition et du temps d'exposition;
■ la calibration du niveau d'image parasite (Effet d'écho) ;
■ la calibration des aberrations chromatiques latérales.

L'installation permet donc d'éviter la boucle classique consistant à exposer le film, procéder à son développement, procéder à l'analyse du film ainsi développer, et enfin réaliser l'ajustement des différents paramètres d'exposition.

L'avantage en résultant est double : gain de temps important, et possibilité d'automatiser la plupart des ajustements.

De fait, préalablement à l'exposition d'un film photosensible, ce calibrage est réalisé par la mise en oeuvre de ce CCD. On sait en effet qu'il existe une petite différence de transmission entre les différents pixels d'un écran à cristaux liquides, cette différence étant inhérente à la réalisation même de ces LCD. En plus, il est également bien connu que les LCD induisent un phénomène de vignettage.

En d'autres termes, ce capteur CCD associé aux algorithmes ad hoc se comporte comme un technicien de maintenance embarqué, capable de régler l'ensemble des paramètres de l'installation liés à la qualité des images.

Selon une caractéristique avantageuse de l'invention, l'installation comporte également une photodiode (17) associée à une lentille (16), toutes deux situées selon l'axe optique de l'installation. La lentille (16), par exemple réalisée en saphir traité antireflets, à sa face bombée en direction du film et sert de point d'appui du film au centre de l'image lorsque ledit film est en place au sein du passe-vue. Elle assure la focalisation de la lumière transmise à travers ledit film vers la photodiode (17). En d'autres termes, la lentille est montée et centrée sur le dispositif presseur du film (ou presse-film) associé au passe vue. La cellule photodiode associée détecte la lumière reçue.

Ainsi, là encore avant exposition d'un film photosensible, on passe dans le passe vue un film déjà exposé que l'on éclaire avec la source lumineuse (1), permettant alors à la cellule photodiode (17) d'agir, en combinaison avec un logiciel associé, à l'instar d'un densitomètre. Elle sert également de calibration par l'envoi de mires stockées dans le PC associé à l'installation et ce, pour faire varier un certain nombre de paramètres de l'installation, et notamment le gain du LCD, l'orientation des polariseurs (d'entrée ou de sortie ou des deux), les tables de correspondances d'exposition, le temps d'exposition, pour tenir compte de l'émulsion revêtant le film photosensible.

La cellule photodiode (17) associée à un amplificateur logarithmique génère une tension, fonction de l'information reçue dans les trois couleurs fondamentales rouge, vert et bleu pour chacune des mires, tension que l'on traduit de manière classique en densité optique.

Cela permet d'agir sur les paramètres de fonctionnement de l'écran LCD et sur la durée d'exposition.

On conçoit de fait les différents avantages procurés par l'installation selon l'invention. Tout d'abord en termes de qualité d'images, on obtient une qualité sensiblement supérieure à celle obtenue par les installations mettant en oeuvre la technologie laser. Cette qualité est en outre maintenue, de manière quasi-automatique de par la mise en oeuvre du CCD et de son logiciel algorithmique associé.

Selon un autre avantage de l'invention, la vitesse de production est optimisée tant en résolution 2K qu'en résolution 4K, de par la mise en oeuvre de l'écran LCD.

Le capteur matriciel d'image (CCD, Cmos ou autre) mis en oeuvre est capable en outre de régler automatiquement l'installation en boucle fermée. Il assure donc un réglage optimum et permanent de l'installation, sans intervention extérieure, et donc s'affranchissant des coûts d'un technicien.

De plus, de par la présence de la cellule photodiode agissant à l'instar d'un densitomètre, l'installation est capable de mesurer automatiquement un film test, et d'ajuster ainsi les paramètres d'exposition en fonction des caractéristiques propres de l'émulsion du film et de l'activité réelle de la chimie. On sait en effet que la nature de l'émulsion d'un film subit quelques variations d'un film à l'autre, et qu'en outre la chimie doit être régulièrement changée nécessitant impérativement l'ajustement des paramètres d'exposition en question. Il résulte donc un avantage important dans la réduction considérable du temps d'immobilisation de la machine lors des calibrations.

## Revendications

1. Installation pour l'exposition d'un film cinématographique à partir d'images numériques, ladite installation comprenant :
- une source lumineuse (1) susceptible d'émettre dans les trois couleurs fondamentales rouge, vert et bleu ;
- des moyens de stockage de film photosensible, respectivement à exposer et exposé ;
- un passe vue apte à positionner ledit film photosensible de manière précise au niveau d'une zone d'exposition ;
- un objectif d'exposition (7) apte à projeter les images numériques au niveau du plan d'exposition dudit passe vue;
- un écran matriciel (4) ;
***caractérisée* :**
- **en ce qu'**au niveau de l'écran matriciel (4), situé sur le faisceau lumineux issu de la source lumineuse (1), sont affichées les différentes images numériques à exposer ;
- et **en ce que** l'installation comprend en outre :
• un miroir escamotable (9), orienté à 45° par rapport à l'axe optique de l'objectif de projection (7) ;
• un dispositif d'analyse d'images (11) positionné symétriquement audit plan d'exposition du passe vue par rapport au plan contenant ledit miroir (9) lorsque celui-ci est en place sur l'axe optique de l'objectif de projection, et apte, lorsque ledit miroir est positionné sur l'axe optique de l'objectif de projection à recevoir l'image transmise par l'écran matriciel (4) issue de l'objectif de projection (7), et, par traitement des signaux ainsi détectés à l'aide d'un logiciel associé, à réaliser le paramétrage des caractéristiques des organes optiques de l'installation, notamment de la source lumineuse et de l'écran matriciel, outre le réglage et le contrôle de focalisation de l'objectif de projection.

2. Installation pour l'exposition d'un film cinématographique selon la revendication 1, ***caractérisée* en ce que** l'écran matriciel est choisi dans le groupe comprenant les écrans à cristaux liquides type LCD, les écrans à tube cathodique ou CRT, les écrans Lcos (LCD on silicium) et les DMD.

3. Installation pour l'exposition d'un film cinématographique selon l'une des revendications 1 et 2, ***caractérisée* en ce que** le dispositif d'analyse d'images est constitué par un circuit à transfert de charges - CCD ou un Cmos (11), dont les signaux sont transmis à un microprocesseur ou carte électronique intégrant les algorithmes de traitement nécessaire aux fins d'aboutir à l'optimisation des paramètres de l'installation.

4. Installation pour l'exposition d'un film cinématographique selon l'une des revendications 2 et 3, dans lequel l'écran matriciel est constitué d'un écran à cristaux liquides, ***caractérisée* en ce que** le bloc d'affichage (2) constitué par l'écran à cristaux liquides (4) et des polariseurs amont (3) et aval (5) qui lui sont associés, est monté sur une platine piézoélectrique, apte à assurer le décalage latéral dudit ensemble, c'est-à-dire perpendiculairement à l'axe optique de l'installation.

5. Installation pour l'exposition d'un film cinématographique selon l'une des revendications 1 à 4, ***caractérisée* en ce qu'**elle comporte également une photodiode (17) associée à une lentille (16), situées sur l'axe optique de l'objectif de projection (7) immédiatement en aval du passe vue, apte à réaliser une analyse densitométrique d'un film exposé par l'installation.

6. Installation pour l'exposition d'un film cinématographique selon l'une des revendications 1 à 5, ***caractérisée* en ce que** le film photosensible progresse en mode pas à pas au niveau du passe-vue, à l'aide d'un moteur muni d'une griffe, venant coopérer avec les perforations dont sont munis les bords latéraux dudit film.

7. Installation pour l'exposition d'un film cinématographique selon la revendication 6, ***caractérisée* en ce qu'**elle comporte des moyens de réalisation de boucles tampon (22a, 22b) en amont et en aval du passe-vue, constitués par un moteur (18) fonctionnant en mode continu, actionnant des tambours, respectivement amont (19a) et aval (19b) coopérant avec ledit film, et dont la vitesse de rotation est synchronisée avec la périodicité de fonctionnement du moteur pas à pas (14) assurant la progression du film au niveau du passe-vue.

8. Installation pour l'exposition d'un film cinématographique selon l'une des revendications 1 à 7, ***caractérisée* en ce que** le film photosensible est stockée sur une bobine de stockage avant exposition, montée sur un moteur (25) créant un couple variable dans le sens inverse de rotation de l'avancement du film, et ce afin de fournir une tension constante sur le film, en fonction du diamètre de la bobine c'est-à-dire en fonction de la quantité de film présente au sein de la bobine.

9. Installation pour l'exposition d'un film cinématographique selon l'une des revendications 1 à 8, ***caractérisée* en ce que** le film photosensible est stocké sur une bobine réceptrice après exposition, montée sur un moteur (26) créant un couple variable dans le sens de rotation de l'avancement du film, et ce afin de fournir une tension constante sur le film, en fonction du diamètre de la bobine c'est-à-dire en fonction de la quantité de film présente au sein de la bobine.

10. Installation pour l'exposition d'un film cinématographique selon l'une des revendications 1 à 9, ***caractérisée* en ce que** l'objectif de projection (7) est associé à un moteur électrique (8), apte à assurer sa mobilité en translation selon l'axe optique de l'installation, afin de permettre l'ajustement de la focalisation sur le plan d'exposition du passe-vue.

11. Installation pour l'exposition d'un film cinématographique selon l'une des revendications 1 à 10, ***caractérisée* en ce que** le miroir (9) est escamotable hors de l'axe optique de l'installation au moyen d'un moteur électrique (10).

## Claims

1. An installation for exposing a cinematographic film from digital images, said installation comprising:
- a light source (1) capable of emitting in the three fundamental colors red, green and blue;
- means for storing film photoresist, respectively for exposure and already exposed;
- a film carrier suitable for positioning said film photoresist accurately at the level of an exposure zone;
- an exposure lens (7) capable of projecting the digital images at the exposure plane of said film carrier;
- a matrix screen (4);
***characterized* :**
- **in that** the various digital images to be exposed are displayed on the matrix screen (4), located on the light beam issuing from the light source (1);
- and **in that** said installation further comprises :
• a retractable mirror (9) oriented at 45° to the optical axis of the projection lens (7);
• an image analysis device (11) positioned symmetrically to said film carrier exposure plane with regard to the plane containing said mirror (9) when the latter is in place on the optical axis of the projection lens, and suitable, when said mirror is positioned on the optical axis of the projection lens, for receiving the image transmitted by the matrix screen (4) issuing from the projection lens (7) and, by processing the signals thereby detected using an associated software, for setting the characteristics of the optical members of the installation, in particular of the light source and of the liquid crystal matrix, in addition to the adjustment and control of the focusing of the projection lens.

2. The installation for exposing a cinematographic film as claimed in claim 1, ***characterized* in that** the matrix screen is selected from the group comprising LCD type liquid crystal screens, cathode ray tubes (CRT) screens, Lcos (LCD on silicon) screens and DMDs.

3. The installation for exposing a cinematographic film as claimed in either of claims 1 and 2, ***characterized* in that** the image analysis device consists of a charge-coupled circuit CCD or a Cmos (11), of which the signals are transmitted to a microprocessor or electronic circuit board incorporating the processing algorithms required to optimize the parameters of the installation.

4. The installation for exposing a cinematographic film as claimed in either of claims 2 and 3, in which the liquid crystal matrix consists of a liquid crystal screen, ***characterized* in that** the display unit (2) formed by the liquid crystal screen (4) and upstream (3) and downstream (5) polarizers associated therewith, is mounted on a piezoelectric stage, suitable for the lateral shifting of said assembly, that is, perpendicular to the optical axis of the installation.

5. The installation for exposing a cinematographic film as claimed in one of claims 1 to 4, ***characterized* in that** it also comprises a photodiode (17) associated with a lens (16), located on the optical axis of the projection lens (7) immediately downstream of the film carrier, suitable for making a densitometric analysis of a film exposed by the installation.

6. The installation for exposing a cinematographic film as claimed in one of claims 1 to 5, ***characterized* in that** the film photoresist advances in stepwise mode in the film carrier, using a motor provided with a claw, which cooperates with the perforations provided on the lateral edges of said film.

7. The installation for exposing a cinematographic film as claimed in claim 6, ***characterized* in that** it comprises means for providing buffer loops (22a, 22b) upstream and downstream of the film carrier, consisting of a motor (18) operating in D.C. mode, actuating drums, respectively upstream (19a) and downstream (19b), cooperating with said film, and of which the speed of rotation is synchronized with the operating frequency of the stepping motor (14) providing the advance of the film at the film holder.

8. The installation for exposing a cinematographic film as claimed in one of claims 1 to 7, ***characterized* in that** the film photoresist is stored on a storage reel before exposure, mounted on a motor (25) creating a variable torque in the reverse direction of rotation of the advance of the film, so as to supply a constant tension on the film, according to the diameter of the reel, that is, according to the quantity of film present in the reel.

9. The installation for exposing a cinematographic film as claimed in one of claims 1 to 8, ***characterized* in that** the film photoresist is stored on a takeup reel after exposure, mounted on a motor (26) creating a variable torque in the direction of rotation of the advance of the film, so as to supply a constant tension on the film, according to the diameter of the reel, that is, according to the quantity of film present in the reel.

10. The installation for exposing a cinematographic film as claimed in one of claims 1 to 9, ***characterized* in that** the projection lens (7) is associated with an electric motor (8) suitable for moving it in translation along the optical axis of the installation, in order to permit the adjustment of the focusing on the exposure plane of the film carrier.

11. The installation for exposing a cinematographic film as claimed in one of claims 1 to 10, ***characterized* in that** the mirror (9) is retractable from the optical axis of the installation by means of an electric motor (10).

## Patentansprüche

1. Anlage zum Belichten eines kinematographischen Films ausgehend von digitalen Bildern, wobei die Anlage umfasst:
- eine Lichtquelle (1), die in der Lage ist, in den drei Grundfarben, rot, grün und blau zu strahlen;
- Einrichtungen zum Lagern eines zu belichtenden bzw. belichteten lichtempfindlichen Films,
- einen Bildschieber, der den lichtempfindlichen Film in Bezug auf einen Belichtungsbereich genau positionieren kann;
- ein Belichtungsobjektiv (7), das die digitalen Bilder in Bezug auf die Belichtungsebene des Bildschiebers projizieren kann;
- einen Matrixbildschirm (4);
**dadurch gekennzeichnet,**
- **dass** in Bezug auf den Matrixbildschirm (4), der sich in dem von der Lichtquelle (1) abgegebenen Lichtstrahl befindet, die verschiedenen zu belichtenden digitalen Bilder angezeigt werden,
- und **dass** die Anlage darüber hinaus umfasst:
• einen Klappspiegel (9), der unter 45° in Bezug auf die optische Achse des Projektionsobjektivs (7) ausgerichtet ist;
• eine Bildanalysevorrichtung (11), die symmetrisch zur Belichtungsebene des Bildschiebers in Bezug auf die den Spiegel (9) enthaltende Ebene ist, wenn sich dieser auf der optischen Achse des Projektionsobjektivs befindet und, wenn der Spiegel auf der optischen Achse des Projektionsobjektivs angeordnet ist, das durch den Matrixbildschirm 4 übertragene, vom Projektionsobjektiv (7) abgegebene Bild empfangen kann und, abgesehen von der Fokussierungsregelung und -steuerung des Projektionsobjektivs, durch Verarbeitung der so erfassten Signale mittels einer zugehörigen Software die Parametrierung der Eigenschaften der optischen Teile der Anlage, insbesondere der Lichtquelle und des Matrixbildschirms bewerkstelligen kann.

2. Anlage zum Belichten eines kinematographischen Films nach Anspruch 1, **dadurch gekennzeichnet, dass** der Matrixbildschirm aus der Gruppe ausgewählt ist, die Flüssigkristallbildschirme der Art LCD-Bildschirme, Bildschirme mit Kathodenstrahlröhre oder CRT, Lcos-Bildschirme (LCD on silicium) und DMDs umfasst.

3. Anlage zum Belichten eines kinematographischen Films nach einem der Ansprüche 1 und 2, **dadurch gekennzeichnet, dass** die Bildanalysevorrichtung aus einer ladungsgekoppelten Schaltung - CCD oder einem Cmos (11) besteht, deren/dessen Signale an einen Mikroprozessor oder eine elektronische Karte übertragen werden, der/die Verarbeitungsalgorithmen integriert, die dazu notwendig sind, eine Optimierung der Parameter der Anlage zu erzielen.

4. Anlage zum Belichten eines kinematographischen Films nach einem der Ansprüche 2 und 3, wobei der Matrixbildschirm aus einem Flüssigkristallbildschirm besteht, **dadurch gekennzeichnet, dass** der Anzeigeblock (2), der aus dem Flüssigkristallbildschirm (4) und diesem zugeordneten vorgeordneten (3) und nachgeordneten (5) Polarisatoren besteht, auf einer piezoelektrischen Platte angebracht ist, die die seitliche Verschiebung dieser Gesamtanordnung, d.h. senkrecht zur optischen Achse der Anlage sicherstellen kann.

5. Anlage zum Belichten eines kinematographischen Films nach einem der Ansprüche 1 bis 4, **dadurch gekennzeichnet, dass** sie auch eine Fotodiode (17) umfasst, die einer Linse (16) zugeordnet ist, die sich auf der optischen Achse des Projektionsobjektivs (7) unmittelbar hinter dem Bildschieber befinden, die eine densitometrische Analyse eines durch die Anlage belichteten Films durchführen kann.

6. Anlage zum Belichten eines kinematographischen Films nach einem der Ansprüche 1 bis 5, **dadurch gekennzeichnet, dass** der lichtempfindliche Film im Schrittmodus in Bezug auf den Bildschieber mittels eines Motors vorrückt, der mit einem Greifer versehen ist, der mit den Perforationen zusammenwirkt, mit denen die Seitenränder des Films versehen sind.

7. Anlage zum Belichten eines kinematographischen Films nach Anspruch 6, **dadurch gekennzeichnet, dass** sie Einrichtungen zum Herstellen von Pufferschleifen (22a, 22b) vor und nach dem Bildschieber umfasst, die von einem im Dauerbetrieb arbeitenden Motor (18) hergestellt werden, der eine vorgeordnete (19a) bzw. nachgeordnete (19b) Trommel betätigt, die mit dem Film zusammenwirken, und dessen Drehzahl mit der Periodizität des Funktionsablaufs des Schrittmotors (14) synchronisiert ist, wodurch das Vorrücken des Films in Bezug auf den Bildschieber sichergestellt wird.

8. Anlage zum Belichten eines kinematographischen Films nach einem der Ansprüche 1 bis 7, **dadurch gekennzeichnet, dass** der lichtempfindliche Film vor der Belichtung auf einer Lagerspule gelagert wird, die an einem Motor (25) angebracht ist, der ein variables Drehmoment in der zum Vorrücken des Films umgekehrten Drehrichtung erzeugt, und zwar, um den Film in Abhängigkeit vom Durchmesser der Spule, d.h. in Abhängigkeit von der in der Spule vorhandenen Filmmenge mit einer konstanten Spannung zu beaufschlagen.

9. Anlage zum Belichten eines kinematographischen Films nach einem der Ansprüche 1 bis 8, **dadurch gekennzeichnet, dass** der lichtempfindliche Film nach der Belichtung auf einer Aufnahmespule gelagert wird, die an einem Motor (26) angebracht ist, der ein variables Drehmoment in der Drehrichtung des Vorrückens des Films erzeugt, und zwar, um den Film in Abhängigkeit vom Durchmesser der Spule, d.h. in Abhängigkeit von der in der Spule vorhandenen Filmmenge mit einer konstanten Spannung zu beaufschlagen.

10. Anlage zum Belichten eines kinematographischen Films nach einem der Ansprüche 1 bis 9, **dadurch gekennzeichnet, dass** das Projektionsobjektiv (7) mit einem Elektromotor (8) verbunden ist, der dessen Translationsbeweglichkeit entlang der optischen Achse der Anlage sicherstellen kann, um die Einstellung der Fokussierung auf die Belichtungsebene des Bildschiebers zu ermöglichen.

11. Anlage zum Belichten eines kinematographischen Films nach einem der Ansprüche 1 bis 10, **dadurch gekennzeichnet, dass** der Spiegel (9) mittels eines Elektromotors (10) aus der optischen Achse der Anlage herausgeklappt werden kann.
